**Europäisches Patentamt**

**European Patent Office**

**Office européen des brevets**

(19)

(11) **EP 1 404 129 A1**

(12) **EUROPEAN PATENT APPLICATION**

(43) Date of publication:
**31.03.2004 Bulletin 2004/14**

(51) Int Cl.⁷: **H04N 5/913**, H04N 7/16,
H04N 7/167, H04N 7/26

(21) Application number: **02292405.4**

(22) Date of filing: **30.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Canal+ Technologies Société
Anonyme
75906 Paris Cedex 15 (FR)**

(72) Inventor: **Wendling, Bertrand,
c/o Canal+Technologies
75906 Paris Cedex 15 (FR)**

(74) Representative: **Weihs, Bruno
Rosenthal & Osha S.A.R.L.
121, avenue des Champs Elysées
75008 Paris (FR)**

(54) **Content protection method and receiver/decoder for carrying out the method**

(57)     The present invention relates to a method for protecting audiovisual content comprising the steps of :

- providing a original digital audiovisual content;
- converting said original digital audiovisual content into a first format digital audiovisual content suitable for broadcast;
- receiving said first format digital audiovisual content on an input port of a receiver/decoder,
- in the receiver/decoder, converting said first format digital audiovisual content into said original digital audiovisual content;

wherein said method further comprises the step of in the receiver/decoder, watermarking as a function of watermark data associated to said receiver/decoder said original digital audiovisual content before outputting said original digital audiovisual content either directly or after converting it into a second format audiovisual content, on an output port of said receiver/decoder, thereby making it possible to reveal after the event the origin of an unauthorized use of said audiovisual content by recovering the watermark data.

FIG. 1

**EP 1 404 129 A1**

## Description

## BACKGROUND OF THE INVENTION

The present invention relates to a content protection method and a receiver/decoder for carrying out the method.

Television broadcast in digital format makes dissemination of the audiovisual content (audio and/or video programmes) easier than in analog format. According to the present invention, audiovisual content means any video programme which may be or not associated with an audio content. Dissemination may be carried out for example via the Internet. This digital nature of contents poses a real threat to those who broadcast proprietary or copyrighted content. The need for those providers to protect their legal rights has sparked a flurry of research activity in the field of copyright protection leading for example to the scrambling technology for premium cable-channels.

Hackers or more generally malicious persons may "break" the existing technology to access unscrambled broadcast digital programmes (also referred to as "contents") - either while being broadcast or after being locally stored - and disseminate the programmes. In addition duly registered subscribers may access the broadcast content for example by using local storage capability and in the receiver/decoder and disseminate such a content.

Local storage capability is used in new generation set top boxes so-called Digital Video Recorders (DVRs) which were introduced on the market during these last years. These DVRs utilize an hard disk drive (HDD) or any other kind of digital storage means (Optical, etc...) which add many additional features that increase the benefits of time-shifting. The random access nature of the HDD enables features such as live pause of television and the ability to watch while recording.

HDD-based time-shifting set top boxes offer the consumer a new way of television viewing. The random access nature of hard disk drives, or equivalent devices, as opposed to the linear nature of tape recording, enables a number of exiting features. The first of these features is the ability to pause live broadcasts. For example, if the telephone rings during watching a favorite television show, the viewer can simply pause the broadcast and resume at a later time.

This same feature can also be used to delay the start of a programme until the viewer is ready to watch it. Unlike a conventional VCR which requires that the viewer waits until the show is over to view it from the beginning, digital recording gives you real time-shifting ability, which allows the viewer to shift the start time of any show to whatever is most convenient for him. In addition, the random access nature of the HDDs provides a much more flexible playback interface over linear tape. As opposed to linear tape, there is no need to rewind or fast forward to move from one programme to another.

The viewer can instantly skip to other programmes recorded on the HDD.

According to a typical solution used in broadcast systems using digital set-top box, all audio/video programmes content is broadcast in the MPEG compression standard. The MPEG standard is the more famous television-quality Standard capable of reducing the bandwidth of analog television into a digital format suitable for broadcast and local storage. The viewer selects a programme to time-shift and this programme is extracted into a single datastream from the multiple digital signals coming to the set top box. After formatting this datastream into the proper format for storage and recall, it is streamed continuously onto the HDD. The datastream can be simultaneously read from the HDD and sent to an MPEG audio/video decoder where it is converted back into an analog signal for output to the television.

Several MPEG standards were defined. For example, the MPEG-2 format for standard definition television signals provides programmes at a data rate of between 2 to 8 million bits per second (Mbps). This generally requires about 2GB of storage for every hour of recording. In order to provide good visual quality when encoding, the digital datastream must be recorded using variable bit rate encoding (VBR) where the actual bit rate changes over time depending on the content of the video. Therefore, the rate at which data is written to and read from the disk may vary over time.

In the typical scenario of time-shifting a live broadcast, one datastream is being put onto the disk, and another simultaneously being taken off of the disk. The combined data traffic across the storage interface can, therefore, be as high as 16 Mbps. Since a disk drive can only read or write at a time, to sustain simultaneous reading and writing the drive must either have a large buffer or be tightly integrated with the bitstream source and target, in this case the incoming transport stream interface and the MPEG-2 decoder.

In addition to the programme datastreams, the drive interface is also responsible for additional data files describing the datastream. The storage interface must handle simultaneous reads and writes of these data in addition to the high bandwidth programme streams, all with a minimal delay. An ideal solution is one in which the storage interface is integrated with the transport stream processing and decoder subsystems.

The digital nature of format used for the broadcast of the audio/video programme raises an important problem regarding the content protection.

To protect against such a possibility, prior art solutions propose that the data to be broadcast is encrypted before being broadcast. In addition, prior art solutions propose that the data to be stored remain encrypted or are newly encrypted when stored on the HDD, and decrypted when read off of the drive. By way of example European patent application with filing number N°01310888.1 filed by the present applicant and patent US-A-6233389, both incorporated by reference in the present application for the purpose of description of technical features of local storage, describe a receiver/decoder with local storage capability.

## SUMMARY OF THE INVENTION

This prior art solution is a satisfactory solution. Nevertheless hackers or more generally malicious people may eventually discover the technology being used given enough time to work on it and break the encryption code(s) or discover the encryption method being used and make the audio/video content (received or locally stored) available to third parties by disseminating it for example via the Internet.

A first objective of the present invention is to provide a content protection method and a receiver/decoder for carrying out the method, which method and receiver/decoder make possible to reveal after the event the origin of the malicious action by an hacker or other malicious persons.

Accordingly, according to the present invention a method for protecting audiovisual content comprises the steps of :

- providing a original digital audiovisual content;
- converting said original digital audiovisual content into a first format digital audiovisual content suitable for broadcast;
- receiving said first format digital audiovisual content on an input port of a receiver/decoder,
- in the receiver/decoder, converting said first format digital audiovisual content into said original digital audiovisual content;

wherein the method further comprises the step of

- in the receiver/decoder, watermarking as a function of watermark data associated to said receiver/decoder said original digital audiovisual content before outputting said original digital audiovisual content either directly or after converting it into a second format audiovisual content, on an output port of said receiver/decoder, thereby making it possible to reveal after the event the origin of an unauthorized use of said audiovisual content by recovering the watermark data.

According to an example conventional embodiment, digital audiovisual content in the first format is a MPEG encoded and scrambled audiovisual datastream and
wherein the second format audiovisual content is a PAL or SECAM audiovisual datastream.

For example, watermark data associated to a receiver/decoder are broadcasted within an EMM message. Alternatively, watermark data associated to a receiver/decoder are broadcasted over a return path channel.

The method may further comprise the step of temporally storing in a digital storage media said digital audiovisual content either in the first format or in any other intermediate format.

According to available alternatives known to the person skilled in the art, watermarking step is carried in one domain from the set of domains comprising the spatial domain, the temporal domain and the frequency domain.

More precisely, if the watermarking step is carried out in the frequency domain, it comprises the step of computing F(i) as follows :

$$F(i) = f(i) + avg(f(i)) \times DATA(i) \times A$$

where f(i) are frequency data outputted from quantization of frequency transform of said audiovisual content datastream, avg(f(i)) is the data outputted from partial average computing, DATA(i) is the watermark data, A is a constant, and i is an index between 1 and N x N, where N defines a pixel block size.

The invention also provides a receiver/decoder for protecting audiovisual content. The receiver/decoder comprses :

- a receiving unit for receiving a first format digital audiovisual content on an input port of a receiver/decoder,
- a converter for converting said first format digital audiovisual content into an original digital audiovisual content;

and is characterized in that it further comprises :

- at least one watermarking unit for watermarking said original digital audiovisual content as a function of watermark data (DATA) associated to said receiver/decoder.

Advantageously, the receiver/decoder operates in combination with a portable security device to store the watermark data.

A subscriber receiving premium content is not allowed to distribute this content. If such content is discovered over any other support (e.g : Internet; etc...), then by analysing the content, it can be possible to track the originator of this non permitted distribution.

As this watermarking is not linked to any reading or displaying protection system, it will not face attacks. It is just a way carrying the identification of the end-viewer receiver that got this content.

## BRIEF DESCRIPTION OF THE DRAWINGS

Another features and advantages of the present invention will appear more clearly from the description which follows, with reference to the appended figures in which:

- Figure 1 shows the overall architecture of a digital television system according to the present invention;
- Figure 2 shows the receiver/decoder according to the present invention; and
- Figure 3 is a schematic block diagram of a electronic watermark data insertion unit used in the present invention.

## DETAILED DESCRIPTION

According to a preferred embodiment of the present invention, a mostly conventional digital television system based upon the known MPEG / DVB system is used.

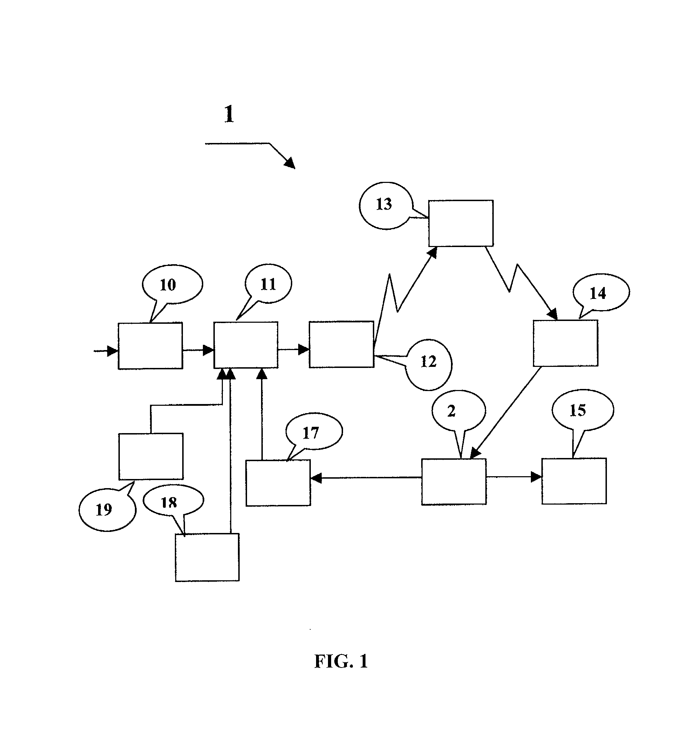

An overview of a digital television system 1 according to the present invention is shown as part of Figure 1. According to this preferred embodiment, the system 1 uses the known MPEG-2 compression standard to transmit compressed digital signals. In more detail, MPEG-2 compressor 10 in a broadcast centre receives an original digital audiovisual content (typically a stream of audio and/or video signals). The output of compressor 10 is connected to an input of a multiplexer/scrambler unit 11. The multiplexer/scrambler unit 11 receives a plurality of further input signals, assembles the transport stream and transmits compressed digital signals to an input of a transmitter 12 of the broadcast centre.

By way of example, transmitter 12 transmits electromagnetic signals via uplink path towards a satellite transponder 13, where they are electronically processed and broadcast via downlink path to earth receiver 14, the latter being conventionally in the form of a set top box dish antenna owned or rented by the viewer (subscriber).

Other transport channels for transmission of the data are of course possible, such as terrestrial broadcast, cable transmission, combined satellite/cable links, telephone networks etc.

The signals received by dish antenna 14 are transmitted to a receiver/decoder, typically a set top box, 2 owned or rented by the viewer and connected to the viewer's television set 15. The receiver/decoder 2 decodes the compressed MPEG-2 signal into a television signal for the television set 15. Although a separate set top box is shown in Figure 1, the set top box may be in the form of a receiver/decoder is part of an integrated digital television. As used herein, the term "receiver/decoder" is intented to designate a separate receiver/decoder, such as a set-top box, and a television having a receiver/decoder integrated therewith.

In a multichannel system, the multiplexer 11 handles audio and video information received from a number of parallel sources and interacts with the transmitter 12 to broadcast the information along with a corresponding number of channels. In addition to audiovisual information, messages or application data or any other kind of digital data may be introduced in some or all of these channels interlaced with the transmitted digital audio and video information.

Advantageously, a conditional access system is used. This conditional access system is partly integrated in the network in the form of access control unit (s) which output(s) is/are connected to an input(s) of the multiplexer 11 and partly integrated in receiver/decoder 2 and/or a smartcard used in connection with the receiver/decoder 2.

Such a conditional access system enables the viewer to access digital television broadcast from one or more broadcast suppliers. According to an embodiement, a smartcard, capable of deciphering messages relating to commercial offers (that is, one or several television programmes sold by the broadcast supplier), can be inserted into the receiver/decoder 2. Using receiver/decoder 2 and the smartcard, the viewer may purchase commercial offers in either a subscription mode or a payper-view mode. If such a conditional access system is used, the original digital audiovisual content previously MPEG-encoded by unit 10 is scrambled by unit 11, the conditions and encryption keys applied to a given transmission being determined by access control unit 18. Transmission of scrambled data in this way is well known in the field of pay TV systems. Typically, scrambled data are transmitted together with a control word for descrambling of the data, the control word itself being encrypted by a so-called exploitation key and transmitted in encrypted form. The MPEG-encoded and scrambled original digital audiovisual content and the encrypted control word are then received by the receiver/decoder 2 having access to an equivalent to the exploitation key stored on a smartcard inserted in the receiver/decoder to decrypt the encrypted control word and thereafter generate the decrypted control word to be used to descramble the transmitted data.

A paid-up subscriber receives, for example on a monthly broadcast basis, in a so-called EMM message (Entitlement Management Message) the exploitation key necessary to decrypt the encrypted control word so as to permit viewing of the transmission.

Interactive applications may also be carried out which are partly located in the broadcast centre and partly in the receiver/decoder 2, and enable the viewer to interact with various applications. Accordingly a return path 17 may be used which uses a back channel which may be, for example a Public Switched Telephone Network (PSTN) channel typically used for example in satellite network (for example, a modem back channel) or an Out of Band (OOB) channel typically used for example in cable network.

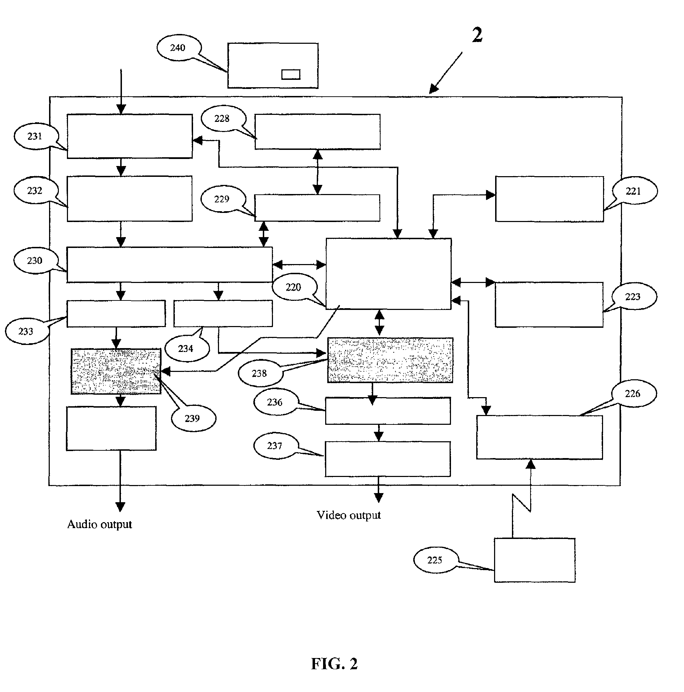

Referring now to Figure 2, the various components (which can be each implemented either as software or hardware or both) of receiver/decoder 2 according to the present invention will now be described in more details.

The receiver/decoder 2, which may be for example a digital set-top box (STB), comprises a central processor 220 including associated memory elements and adapted to receive and output data from a modem 223. Receiver/decoder 2 is additionally adapted to receive input signals from an infra-red remote control 225 via a control unit 226 and also possesses a smartcard reader 228 adapted to read a subscription smartcard 240. The subscription smartcard reader 228 cooperates with an inserted subscription card 240 and with a conditional access unit 229 to supply the necessary control word to a demultiplexer/descrambler 230 to enable the received MPEG-encoded and scrambled original digital audiovisual content to be descrambled. As it will be described more precisely in a following part of this description, advantageously watermark data are stored in the subscription smartcard 240 to be used as identification string to be stored in the watermarked data.

The receiver/decoder also includes a conventional tuner 231 and a FEC demodulator 232 to receive and demodulate the received MPEG-encoded and scrambled original digital audiovisual content. The resulting MPEG-encoded and scrambled original digital audiovisual content is applied to demultiplexer/descrambler unit 230 for descrambling and demultiplexing. Descrambled MPEG-encoded audio and video signals available at the output of unit 230 are transmitted to a MPEG video decoder 234 and to an audio decoder 233 respectively for separate MPEG decoding.

Unit 233 and unit 234 deliver original digital audiovisual content audio and video signals respectively. These original digital audiovisual content audio and video signals are then applied to an audio watermarking unit 239 and a video watermarking unit 238 respectively to be made available to audio or video outputs.

The resulting watermarked original digital audiovisual content audio and video signals may be applied to television set either directly or through a preamplificator for the watermarked original digital audiovisual content audio signal and through a graphic processor 236 and a PAUSECAM encoder 237 for the watermarked original digital audiovisual content video signal.

It is to be noted that according to the present invention, receiver/decoder 2 may also comprise an hard disk 221 or any kind of local storage device in the receiver/decoder. The operation of such an hard disk is by way of example described in the european patent application with filing number N°01310888.1 filed by the present applicant or in the patent US-A-6233389, both incorporated by reference in the present application for the purpose of description of technical features of local storage.

The watermarking algorithm as well as the watermarking parameters or coefficients may be stored in the smart-card (or any other portable security device) 240 for use by the host CPU 220 and the watermarking units 238 and 239. If no smartcard is used in combination with receiver/decoder 2, any identification number or string stored in said receiver/decoder 2 can be processed for watermarking as long as it can be used for later identification (e.g. serial number, MAC address...).

To be effective in the protection of the ownership of copyright, an invisibly watermarked content must satisfy at least the following criteria:

1. the watermark must be difficult (or impossible) to remove, at least without visibly degrading the original content,

2. the watermark must survive image modifications that are common to typical image-processing applications (e.g., scaling, color requantization, dithering, cropping, scrambling, image compression, .....),

3. the watermark should be imperceptible so as not to affect the experience of viewing the image.

Watermarking methods for graphics and audio signals may work in the spatial, time or frequency domains or a combination of them according to algorithms well-known to the person skilled in the art. The advantage of frequency-domain watermarking is that the watermark is spread throughout the whole video or audio clip and hence is resistant to cropping or cutting, even if standard frequency filter, or lossy compression algorithms, which usually filters out the less significant frequencies, could damage the watermark. In the frequency domain, since high frequencies will be lost by compression or scaling, the watermark signal is applied to lower frequencies, or better yet, applied adaptively to frequencies that contain important information of the original picture (feature-based schemes).

The present invention encompasses all kinds of watermarking method including but not limited to spatial, time, frequency domains or a combination of them. By way of example, the preferred embodiment refers to the frequency domain.

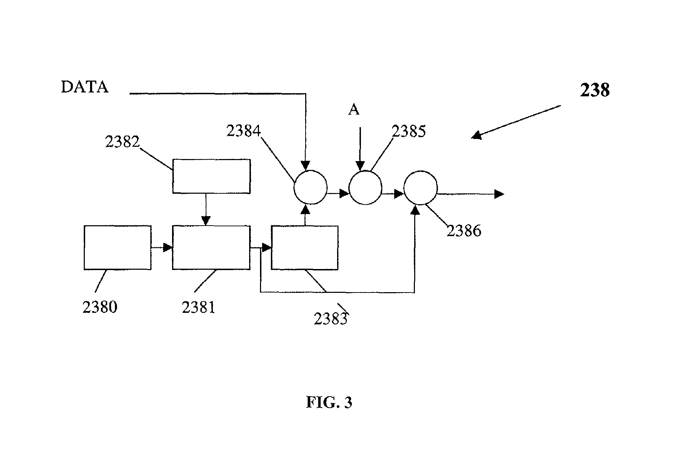

According to FIG.3, there is shown an electronic watermark data insertion unit 238 according to an embodiment of the present invention. The electronic watermark data insertion unit shown includes a DCT calculator 2380 (which calculates DCT - discrete cosine transform - coefficients from successive extracted blocks of (8 x 8) pixels in a current image which is the object of insertion of electronic watermark data, a quantizer 2381 for quantizing data outputted from DCT calculator 2380, a quantization table 2382 used by the quantizer 2381 to perform quantization, an electronic watermark data insertion device which comprises a partial average computation circuit 2383, two multipliers 2384-2385 and an adder 2386.

The partial average calculation circuit 2383 calculates a partial average avg(f(i)) of three neighboring points of data outputted from the quantizer 2381 in accordance with the formulae avg $(f(i)) = (| f(i-1) | + | f(i) | + |f(i+1)| )/3$. The multiplier 2384 multiplies the watermark data DATA(i) (which watermark data DATA(i) identifies the receiver/decoder 2) and the output of partial average computation circuit 2383 for each index value i. Multiplier 2386 multiplies each value output from multiplier 2384 by a constant A which is used to vary the size of the electronic watermark data to be inserted. Adder 2386 adds the signal output from multiplier 2385 and the output of the quantizer 2381 for each index value i. Typically the watermark data are unique to a receiver/decoder, each receiver/decoder (or associated smartcard) storing its own watermark data DATA. Watermark data are for example the serial number of the receiver/decoder or data obtained therefrom.

As a consequence, the electronic watermark data insertion circuit elements performs calculation defined by the following expression:

$$F(i) = f(i) + avg(f(i)) \times DATA(i) \times A$$

where f(i) is the data outputted from the quantizer 2381, avg(f(i)) is the data outputted from the partial average calculator 2383, DATA(i) is the electronic watermark data, A is a constant, and i is the index value in zigzag scanning of a block of NxN = 8 x 8 pixels.

A watermark data detection system (not represented) used to read a watermark and detect the watermark DATA(i) includes a dequantizer for dequantizing data outputted from a decoder, for example a MPEG-2 decoder, an inverse DCT calculator for performing inverse DCT calculation for data outputted from the dequantizer to obtain image data, an electronic watermark data extractor for extracting from among data outputted from the decoder those data which are supposed to be electronic watermark data, an adder for adding data in units of a block of 8 x 8 pixels outputted from the electronic watermark data extractor for over one screen, and an inner product calculator for calculating inner products of electronic watermark data to be detected and data outputted from the adder to obtain a statistical similarity and outputting the statistical similarity.

The electronic watermark data extractor includes a partial average calculator for calculating a partial average of three neighboring points of data in units of a block of 8 x 8 pixels outputted from the decoder in accordance with avg(F(i)) = (| F(i-1) | + | F(i) | + | F(i+1) | )/3, and a divider for dividing data F(i) outputted from the decoder 202 by a partial average avg(F(i)) outputted from the partial average calculator.

The electronic watermark data extractor 206 performs calculation defined by the following expression:

$$DATA(i) = F(i)/avg(F(i))$$

where F(i) is the data outputted from the decoder, avg (F(i)) is the partial average outputted from the partial average calculator, DATA(i) is the data which are supposed to include electronic watermark data outputted from the electronic watermark data extractor, and i is the number of each pixel of a block of NxN = 8 x 8 pixels.

The local watermarking units (238 for the video and 239 for the audio) have the task of processing their respective signal by inserting the watermarking information into the real-time signal. It would be nevertheless a solution to use an electronic watermark data insertion unit only for the video and/or the audio signal.

The way the watermarking information is inserted into the signal depends on the watermarking method and algorithm used. The present invention can be used with any type of watermarking method.

As illustration, the following watermarking method can be used:

It is nevertheless advantageous that the data watermarking occurs in the medium frequency range allowing watermark data to survive MPEG compression which removes part of the high frequency spectrum. In addition by not applying the method in the low frequency range it is more difficult to detect it easily.

It is to be noted that number of blocks of (NxN = 8x8) pixels and their position in the picture to be processed to watermark the content are part of the parameters that are have to be selected to make it more robust. For the audio watermarking system, a similar approach can be used, based also on the DCT of the sampled digital audio signal.

With reference to Figure 1, advantageously and according to another feature of the present invention, a watermarking management unit (WMU) 30 is used to generate and manage the information required by the units 238 and 239 of the Figure 2. The WMU 19 has the function of selecting new parameters or algorithms to be transmitted to the receiver 13 and stored either in the receiver/decoder 2 or in the smartcard 240. The transmission of theses parameters can be performed over the normal DVB/MPEG2 signal generated by the multiplexer/scrambler 6. This can be done within an EMM (Entitlement Management Message) used for the conditional access system 15, or over the return path channel 17. According to the general knowledge of the skilled person in the art, in conditional access systems for example according to Videocrypt, an EMM (Entitlement Management Message) consists usually of four fields. Each EMM starts with an address field to select an individual receiver/decoder. There are two addressing modes, one for an individual receiver/decoder and one for a group of receivers/decoders. The second field contains the entitlement for the user. The third field contains the service keys in encrypted form and the last field contains a data integrity check. EMM's can also be used to send a command to the receiver/decoder. According to the to one embodiment of the present invention, benefit is taken that each EMM starts with an address field to select an individual receiver/decoder to send periodically (e.g each month) to each individual receiver/decoder a respective watermark data. A database is maintained which associates to each receiver/decoder a corresponding watermark data. In this case, demultiplexer/descrambler unit 230 demultiplexes said watermark data associated to said receiver/decoder from the other data flows (including received MPEG-encoded and scrambled original digital audiovisual content) received in the broadcast signal to provide it to the host CPU 220, the latter storing these watermark data in smartcard 240. Advantageously, each receiver/decoder stores its watermark data in a portable security module (typically a smartcard) which in normal operating mode is inserted in the reader slot of the receiver/decoder.

According to another embodiment, the watermark data are sent to each receiver/decoder through the downlink path of the return path.

Current state of the art is focusing on watermarking at the production or broadcasting level. Purposes is following :

- Insert hidden information in order to carry key limiting or preventing the copy of the content.
- Insert hidden control or access rights keys to limit the number of time or the period where a content can be viewed.

The present invention do not work in this way. The watermarking is used to insert an identification information without any limitation or access control feature. Therefore, there is a very low risk that somebody tries to identify and remove this watermark.

The inserted watermark has the purpose of allowing afterwards (this mean if a content is illegally distributed) the identification of the source of this distribution. This approach is very important for content broadcast for premium or Pay-Per-View channels, as well as for music.

According to another important embodiment of the present invention, in addition to the watermarking in the receiver/decoder of the original digital audiovisual content as a function of first watermark data, DATA1, associated to said receiver/decoder, the original digital audiovisual content is watermarked before being broadcasted with second watermark data, DATA2, before broadcast. When a content is suspected as potentially disseminated from malicious actions, a watermark data detection system is used which is able to detect whether, on the one hand, the first watermark data, DATA are present in the suspected content, and whether, on the other hand, the second watermark data, DATA2 are present in the suspected content. If both first and second watermark data DATA1 and DATA2 are present in the content, then it means that the dissemination was made by a duly registered subscribed owning or renting an identified receiver/decoder. If only the first watermark data DATA1 is present in the content, then it means that the dissemination was made by a non-registered subscribed owning an unauthorized receiver/decoder.

## Claims

1. Method for protecting audiovisual content comprising the steps of :

    - providing a original digital audiovisual content;
    - converting said original digital audiovisual content into a first format digital audiovisual content suitable for broadcast;
    - receiving said first format digital audiovisual content on an input port of a receiver/decoder,
    - in the receiver/decoder, converting said first format digital audiovisual content into said original digital audiovisual content;

    wherein said method further comprises the step of

    - in the receiver/decoder, watermarking as a function of watermark data associated to said receiver/decoder said original digital audiovisual content before outputting said original digital audiovisual content either directly or after converting it into a second format audiovisual content, on an output port of said receiver/decoder, thereby making it possible to reveal after the event the origin of an unauthorized use of said audiovisual content by recovering the watermark data.

2. Method as claimed in claim 1, **characterized in that** said digital audiovisual content in the first format is a MPEG encoded and scrambled audiovisual datastream and wherein the second format audiovisual content is a PAL or SECAM audiovisual datastream.

3. Method as claimed in claim 1 or 2, **characterized in that** it further comprises the step of broadcasting said watermark data associated to said receiver/decoder within an EMM message.

4. Method as claimed in claim 1 or 2, **characterized in that** it further comprises the step of broadcasting said watermark data associated to said receiver/decoder over a return path channel.

5. Method as claimed in anyone of claims 1 to 4, further comprising the step of temporally storing in a digital storage media said digital audiovisual content either in the first format or in any other intermediate format.

6. Method as claimed in anyone of previous claims, wherein said watermarking step is carried in one domain from the set of domains comprising the spatial domain, the temporal domain and the frequency domain.

**7.** Method as claimed in claim 6, wherein said watermarking step is carried out in the frequency domain and comprises the step of computing F(i) as follows :

$$F(i) = f(i) + avg(f(i)) \times DATA(i) \times A$$

where f(i) are frequency data outputted from quantization of frequency transform of said audiovisual content datastream, avg(f(i)) is the data outputted from partial average computing, DATA(i) is the watermark data, A is a constant, and i is an index between 1 and N x N, where N defines a pixel block size.

**8.** Receiver/decoder for protecting audiovisual content comprising :

- a receiving unit for receiving a first format digital audiovisual content on an input port of a receiver/decoder,
- a converter for converting said first format digital audiovisual content into an original digital audiovisual content;

**characterized in that** said receiver/decoder further comprises :

- at least one watermarking unit for watermarking said original digital audiovisual content as a function of watermark data (DATA) associated to said receiver/decoder.

**9.** Receiver/decoder according to claim 1, wherein said converter comprises at least one of the unit selected from the group of :

- descrambler unit, and
- MPEG-decoding unit.

**10.** Receiver/decoder according to anyone of claims 8 or 9, **characterized in that** it further comprises a demultiplexer unit to demultiplex said watermark data associated to said receiver/decoder received in a broadcast message.

**11.** Receiver/decoder according to claim 10, **characterized in that** it operates in combination with a portable security device to store said watermark data.

**12.** Receiver/decoder according to anyone of claims 8 to 11, **characterized in that** said watermarking unit comprises a computation device for computing values F(i) as follows :

$$F(i) = f(i) + avg(f(i)) \times DATA(i) \times A$$

where f(i) are frequency data outputted from quantization of frequency transform of said audiovisual content datastream, avg(f(i)) is the data outputted from partial average computing, DATA(i) is the watermark data, A is a constant, and i is an index between 1 and N x N, where N defines a pixel block size.

FIG. 1

FIG. 2

DATA

238

2382

2384

A

2385

2380

2381

2383

2386

FIG. 3

EP 1 404 129 A1

**European Patent Office**

# EUROPEAN SEARCH REPORT

Application Number

EP 02 29 2405

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 51348 A (MACROVISION CORP) 31 August 2000 (2000-08-31) * page 4, line 27 - line 36 * * page 6, line 14 - page 9, line 7 * * page 12, line 22 - page 14, line 21 * * page 16, line 1 - line 2 * * figure 4 * --- | 1,2,4,5, 8,9 | H04N5/913 H04N7/16 H04N7/167 H04N7/26 |
| A | WO 01 76253 A (SONY UK LTD ;STONE JONATHAN JAMES (GB)) 11 October 2001 (2001-10-11) * page 12, line 19 - page 17, line 11 * * figures 5-7 * --- | 2,6 | |
| A | EP 1 134 977 A (IRDETO ACCESS BV) 19 September 2001 (2001-09-19) * page 3, column 3, line 27 - page 4, column 5, line 26 * ----- | 3,11 | |
|  |  |  | TECHNICAL FIELDS SEARCHED (Int.Cl.7) H04N |

The present search report has been drawn up for all claims

| Place of search | Date of completion of the search | Examiner |
|---|---|---|
| THE HAGUE | 27 February 2003 | Van der Zaal, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

EP 02 29 2405

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2003

| Patent document cited in search report | | Publication date | Patent family member(s) | | Publication date |
|---|---|---|---|---|---|
| WO 0051348 | A | 31-08-2000 | AU | 3378500 A | 14-09-2000 |
| | | | BR | 0008456 A | 29-01-2002 |
| | | | CA | 2361571 A1 | 31-08-2000 |
| | | | CN | 1355991 T | 26-06-2002 |
| | | | EP | 1155569 A2 | 21-11-2001 |
| | | | JP | 2002538685 A | 12-11-2002 |
| | | | WO | 0051348 A2 | 31-08-2000 |
| WO 0176253 | A | 11-10-2001 | AU | 4435201 A | 15-10-2001 |
| | | | CN | 1381141 T | 20-11-2002 |
| | | | EP | 1183872 A1 | 06-03-2002 |
| | | | WO | 0176253 A1 | 11-10-2001 |
| | | | US | 2002124173 A1 | 05-09-2002 |
| EP 1134977 | A | 19-09-2001 | EP | 1134977 A1 | 19-09-2001 |
| | | | AU | 4346501 A | 17-09-2001 |
| | | | EP | 1264436 A1 | 11-12-2002 |
| | | | WO | 0167667 A1 | 13-09-2001 |
| | | | US | 2003009669 A1 | 09-01-2003 |

EPO FORM P0459

For more details about this annex : see Official Journal of the European Patent Office, No. 12/82